# EUROPÄISCHE PATENTSCHRIFT

(11) **EP 3 693 428 B1**
(45) Veröffentlichungstag und Bekanntmachung des Hinweises auf die Patenterteilung: **03.04.2024**
(21) Anmeldenummer: 20156133.9
(22) Anmeldetag: 07.02.2020
(51) Int. Cl.: C09J 5/00, B60R 16/02, C09J 7/30, H01B 13/012

(54) **MIT FEUCHTIGKEIT HÄRTBARES KLEBEBAND UND VERFAHREN ZUM UMMANTELN VON LANGESTRECKTEM GUT INSBESONDERE LEITUNGEN**
ADHESIVE TAPE THERMALLY CURABLE WITH MOISTURE AND METHOD FOR COVERING ELONGATED PRODUCTS IN PARTICULAR CABLES
BANDE ADHÉSIF DURCISSABLE À L'HUMIDITÉ ET PROCÉDÉ DE GAINAGE DES PRODUITS ALLONGÉS, EN PARTICULIER CONDUITES

(30) Priorität: 08.02.2019 DE 102019103122
(43) Veröffentlichungstag der Anmeldung: 12.08.2020
(73) Patentinhaber: tesa SE, 22848 Norderstedt (DE)
(72) Erfinder: Klingeberg, Kerstin, 22527 Hamburg (DE); Simonis, Heike, 22299 Hamburg (DE); Guldbrandsen, Lars, 22885 Barsbüttel (DE); Kupsky, Marco, 25451 Quickborn (DE); Kerep, Patrick, 22767 Hamburg (DE)
(74) Vertreter: tesa SE

(56) Entgegenhaltungen:
- DE-A1-102016 220 166
- JP-A- H09 306 246
- JP-A- 2008 226 587
- JP-A- 2014 146 506
- US-A1- 2013 277 106

## Beschreibung

Die Erfindung betrifft Verfahren zum Ummanteln von langgestrecktem Gut, insbesondere Kabelsätzen.

Seit geraumer Zeit werden in der Industrie Klebebänder zur Herstellung von Kabelbäumen verwendet. Die Klebebänder werden zum Bündeln einer Vielzahl von elektrischen Leitungen vor dem Einbau oder in bereits montiertem Zustand eingesetzt, um beispielsweise den Raumbedarf des Leitungsbündels durch Bandagieren zu reduzieren und zusätzlich Schutzfunktionen wie Schutz gegen mechanische und/oder thermische Beanspruchung zu erreichen. Gängige Formen von Klebebändern umfassen Folien- oder Textilträger, die in der Regel einseitig mit Haftklebemassen beschichtet sind. Klebebänder zum Ummanteln von langgestreckten Gütern sind beispielsweise aus der EP 1 848 006 A2, der DE 10 2013 213 726 A1, und der EP 2 497 805 A1 bekannt.

Derzeitige mit Klebeband umwickelte Kabelsätze sind in der Regel flexibel. Dies ist jedoch aus fertigungstechnischen Gründen oft unerwünscht. In der Fertigung werden die Kabelstränge in der Regel zu einem Kabelplan vorgefertigt und dann in das zu bestückende Objekt wie beispielsweise Automobile eingesetzt. Ein Kabelsatzplan entspricht der tatsächlichen räumlichen Anordnung der einzelnen Kabelstränge in dem Kabelsatz, also welcher Kabelstrang an welcher Stelle in welchem Winkel gebogen ist, wo sich Positionen von Abzweigen oder Ausbindungen befinden und mit welchen Steckern die Enden der Kabelstränge belegt sind.

Um die einzelnen Stränge des Kabelsatzes in einer bestimmten Form zu halten, so dass sie zum Beispiel im Motorraum um den Motor herumgeführt werden können, ohne mit dem Motor in Kontakt zu kommen, werden um den mit Klebeband umwickelten Kabelbaum üblicherweise nachträglich Spritzgussteile angebracht. Diese Spritzgussteile haben aber den Nachteil, dass ein zusätzlicher Material- und Montageaufwand anfällt.

In der WO 2015/004190 A1 wird ein Verfahren zum Ummanteln von langgestrecktem Gut wie insbesondere Leitungen oder Kabelsätzen offenbart, bei dem das langgestreckte Gut mit einem Klebeband mit darauf aufgebrachter aushärtbarer Klebemasse in einer Schraubenlinie oder in axialer Richtung umhüllt wird und die auf dem Klebeband aufgebrachte Klebemasse durch Zufuhr von Strahlungsenergie wie Wärme ausgehärtet wird. Zur thermischen Aushärtung wird dabei eine Temperatur von 175°C angewendet.

Nachteilig bei diesem Verfahren ist die hohe Aushärtungstemperatur, die bei der Montage von Kabelsträngen während des Fertigungsprozesses beispielsweise in der Automobilindustrie wenig praktikabel ist, insbesondere weil die oft aus PVC gefertigten Kabelisolierungen beschädigt werden können. Folglich werden bislang Kabelpläne in vorgefertigen Spritzgussformen verlegt. Dies ist mit hohem Fertigungsaufwand verbunden.

Daher sind Klebebänder wünschenswert, die bei höchstens 110°C, bevorzugt höchstens 100°C, weiter bevorzugt bei etwa Raumtemperatur aushärten, damit die Umhüllung von Klebebändern in den Fertigungsprozess der Kabelbäume bzw. Kabelpläne integriert werden kann. Die Klebebänder müssen nach dem Aushärten die geforderten Anforderungen an Formstabilität aufweisen. Andererseits dürfen die Klebemassen nicht schon bei der Lagerung aushärten, da sie ansonsten nicht mehr verwendbar sind. Schließlich soll die Aushärtung innerhalb der Taktzeit des Herstellungsprozesses (ca. 6 Min.) stattfinden.

Die US 2013/277106 A1 beschreibt ein Verfahren zum Ummanteln von Kabelsätzen, bei dem ein Band, das ein mit Feuchtigkeit härtendes Bindemittel aufweist, in einer Schraubenlinie um das langgestreckte Gut geführt wird. Anschließend werden die Kabelsätze mitsamt dem umhüllenden Band in die gewünschte Anordnung gebracht. Während das mit Feuchtigkeit härtende Bindemittel aushärtet, wird das Gut in dieser Anordnung gehalten.

Die JP 2008 226587 A, die JP H09 306246 A und die JP 2014 146506 A offenbaren jeweils ebenfalls ein Verfahren zum Ummanteln von Kabelsätzen bei dem ein Band, das ein mit Feuchtigkeit härtendes Bindemittel aufweist, in einer Schraubenlinie um das langgestreckte Gut geführt wird. Während das mit Feuchtigkeit härtende Bindemittel aushärtet, wird das Gut in der vorgegebenen Anordnung gehalten.

Mit der DE 10 2016 220 166 A1 ist ein Verfahren zum Ummanteln von langgestrecktem Gut wie insbesondere Leitungen oder Kabelsätzen bekannt geworden, wobei ein aktivierbares Material um ein Kabelstrang angebracht oder angeordnet wird, indem beispielsweise das Leitungsbündel mit dem aktivierbaren Material umhüllt wird und das langgestreckte Gut mitsamt dem umhüllenden Material in der gewünschten Anordnung gehalten wird, während die aushärtbare Klebemasse aushärtet.

Aus der WO 03/055930 A1 sind emissionsarme Polyurethanpolymerprodukte auf der Basis von autokatalytischen Polyolen bekannt, die durch Modifikation herkömmlicher Polyole mit tertiären Aminen hergestellt werden, sowie Verfahren zu deren Herstellung. Diese Produkte können auch Klebemassen sein, die im Automobilsektor eingesetzt werden.

Aufgabe der vorliegenden Erfindung ist es daher, Verfahren zum Ummanteln von langgestrecktem Gut unter Verwendung eines rigiden Bandes, das die oben beschriebenen Anforderungen erfüllt, zur Verfügung zu stellen.

Zur Lösung der technischen Probleme wird ein Verfahren zum Ummanteln von langgestrecktem Gut wie insbesondere Leitungen oder Kabelsätzen vorgeschlagen, wobei ein Band, das ein feuchtigkeitshärtendes Bindemittel auf einem Träger umfasst, zunächst mit Wasser befeuchtet wird und unmittelbar anschließend in einer Schraubenlinie um das langgestreckte Gut geführt wird oder das langgestreckte Gut in axialer Richtung von dem Band umhüllt wird, das langgestreckte Gut mitsamt dem umhüllenden Band in die gewünschte Anordnung, insbesondere in den Kabelsatzplan gebracht wird, das langgestreckte Gut in dieser Anordnung gehalten wird, während das mit Feuchtigkeit Bindemittel aushärtet.

Das mit Feuchtigkeit härtbare Bindemittel umfasst freie Isocyanatgruppen aufweisende NCO-Präpolymere auf Basis von aromatischen Polyisocyanaten und tertiären Aminstickstoff aufweisenden Polyolen.

Alternativ wird zur Lösung der technischen Probleme ein Verfahren zum Ummanteln von langgestrecktem Gut wie insbesondere Leitungen oder Kabelsätzen vorgeschlagen, wobei ein Band, das ein feuchtigkeitshärtendes Bindemittel auf einem Träger umfasst, in einer Schraubenlinie um das langgestreckte Gut geführt wird oder das langgestreckte Gut in axialer Richtung von dem Band umhüllt wird, das langgestreckte Gut mitsamt dem umhüllenden Band in die gewünschte Anordnung, insbesondere in den Kabelsatzplan gebracht wird, das langgestreckte Gut in dieser Anordnung gehalten wird, und das Bindemittel durch die Zufuhr von Feuchtigkeit, z.B. Wasserdampf, Wassersprühnebenl oder Umwickeln mit einem feuchten Tuch, zum Aushärten gebracht wird.

Gemäß einer Ausführungsform der Erfindung handelt es sich bei dem langgestreckten Gut um einen Kabelstrang, der ein Bündel aus mehreren Kabeln, wie 3 bis 1000 Kabeln, bevorzugt 10 bis 500 Kabeln, insbesondere zwischen 50 und 300 Kabeln umfasst.

Bänder, die feuchtigkeitshärtendes **Bindemittel** umfassen, sind gut bekannt und werden zur Herstellung von Stützverbänden oder orthopädischen Steifverbänden verwendet.

Besonders bevorzugte mit Feuchtigkeit härtbare Bindemittel zur Verwendung in der vorliegenden Erfindung sind mit Feuchtigkeit härtbare isocyanatfunktionelle Präpolymere. Geeignete Systeme dieses Typs sind zum Beispiel in den US-Patenten Nr. 4,131,114, 4,376,438, 4,433,680, 4,411,262, 4,433,680, 4,502,479, 4, 667, 661, 5, 944, 674 und 6,595,938 offenbart.

Der hier verwendete Ausdruck "*mit Feuchtigkeit härtbare iso-cyanat funktionelle Präpolymere*" bedeutet ein Präpolymer, das von einer Polyisocyanatverbindung und einer Verbindung oder einem Oligomer mit reaktivem Wasserstoff (z. B. einem "Polyol") abgeleitet ist. Eine Verbindung mit reaktivem Wasserstoff ist eine Verbindung mit aktivem Wasserstoff im Einklang mit dem wohlbekannten Zerevitinov-Test, wie er zum Beispiel in Chemistry of Organic Compounds von Carl R. Noller, Kapitel 6, S. 121-122 (1957), beschrieben ist. Das Präpolymer hat ausreichend Isocyanatfunktionen, um bei der Einwirkung von Wasser, z.B. Wasserdampf oder vorzugsweise flüssigem Wasser, auszuhärten.

Die mit Feuchtigkeit härtbaren Bindemittel umfassen erfindungsgemäß freie Isocyanatgruppen aufweisende NCO-Präpolymere auf Basis von aromatischen Polyisocyanaten und tertiären Aminstickstoff aufweisende Polyolen. Vorzugsweise weisen die Präpolymere einen NCO-Gehalt von 5 bis 30 Gew.-% und einen Gehalt an tertiärem Aminstickstoff von 0,05 bis 2,5 Gew.-% auf, wie in der DE 2651089 A1 beschrieben, auf die hier vollständig Bezug genommen wird.

Erfindungsgemäß geeignete Isocyanate sind zum Beispiel 2,4-Toluoldiisocyanat, 2,6-Toluoldiisocyanat und Gemische dieser Isomere; 4,4'-Diphenylmethandiisocyanat; 2,4'-Diphenylmethandiisocyanat und mögliche Gemische dieser Isomere mit 2,2'-Diphenylmethandiisocyanat; aromatische Polyisocyanate und ihre Gemische. Geeignete aromatische Polyisocyanate sind beispielsweise aus der Phosgenierung des Kondensationsprodukts von Anilin und Formaldehyd abgeleitet. Vorzugsweise wird ein Iso-cyanat mit geringer Flüchtigkeit wie Diphenylmethandiisocyanat (MDI) verwendet. Zu den geeigneten kommerziell erhältlichen Isocyanat-Ausgangs-stoffen gehören "ISONATE" 2143L (erhältlich von Dow Chemical Co.), "MONDUR" MRS (Mobay Chem. Co., Pittsburg, PA) und "PAPI" (Dow Chemical Co.).

Erfindungsgemäß geeignete Polyole sind zum Beispiel Polyalkylenoxide (z.B. Polyethylenoxid und Polybutylenoxid), Polypropylenetherglycole (erhältlich von Arco Chemical unter dem Handelsnamen "Arcol PPG" und von BASF Wyandotte unter dem Handelsnamen "Pluracol"), Polytetramethylenetherglycole (z.B. "Polymeg" von der Quaker Oats Co. oder "Terathane" von E.I. Du Pont de Nemours Co., Wilmington, DE), Polycaprolactondiole (z.B. Polyolserie "Tone" von Union Carbide) sowie Polyesterpolyole (z.B. hydroxyterminierte Polyester, die man durch Veresterung von Dicarbonsäuren und Diolen erhält; wie die "Rucoflex"-Polyole, die von der Ruco-Abteilung, Hooker Chemical Co., erhältlich sind). Durch Verwendung niedermolekularer Polyole kann die Steifigkeit des gehärteten Harzes im Allgemeinen erhöht werden.

Ein Beispiel für ein erfindungsgemäß geeignetes Bindemittel umfasst ein Isocyanat, das als Isonate^{™} 2143L bekannt und von der Dow Chemical Company erhältlich ist, und ein Polypropylen-oxidpolyol, das von Arco Chemical erhältlich und als Arcol PPG725 bekannt ist. Um die Lagerbeständigkeit des Materials zu erhöhen, enthält es vorzugsweise 0,01 bis 1,0 Gew.-% Benzoyl-chlorid oder eines anderen geeigneten Stabilisators (bezogen auf das Gesamtgewicht des Harzes).

Hinsichtlich der erfindungsgemäß besonders bevorzugten mit Feuchtigkeit härtbaren Bindemittel wird insbesondere auf den Inhalt des US-Patents 6,595,938 Bezug genommen.

Als **Träger** können alle bekannten Folien und textilen Träger wie Gestricke, Gelege, Bänder, Geflechte, Nadelflortextilien, Filze, Gewebe (umfassend Leinwand-, Köper und Atlasbindung), Gewirke (umfassend Kettenwirkware und Strickware) oder Vliese verwendet werden, wobei unter "Vlies" zumindest textile Flächengebilde gemäß EN 29092 (1988) sowie Nähwirkvliese und ähnliche Systeme zu verstehen sind. Besonders vorteilhaft ist ein Klebeband, bei dem als Träger ein Gewebe, ein Vlies oder ein Gewirke eingesetzt wird. Derartige Träger sind beispielsweise in der WO 2015/004190 A1 beschrieben, auf die hier vollständig Bezug genommen wird.

Des Weiteren können Abstandsgewebe und -gewirke mit Kaschierung verwendet werden. Derartige Abstandsgewebe werden in der EP 0 071 212 B1 offenbart. Abstandsgewebe sind mattenförmige Schichtkörper mit einer Deckschicht aus einem Faser- oder Filamentvlies, einer Unterlagsschicht und zwischen diesen Schichten vorhandene einzelne oder Büschel von Haltefasern, die über die Fläche des Schichtkörpers verteilt durch die Partikelschicht hindurchgenadelt sind und die Deckschicht und die Unterlagsschicht untereinander verbinden.

Als Vliesstoffe kommen besonders verfestigte Stapelfaservliese, jedoch auch Filament-, Meltblown sowie Spinnvliese in Frage, die meist zusätzlich zu verfestigen sind. Als mögliche Verfestigungsmethoden sind für Vliese die mechanische, die thermische sowie die chemische Verfestigung bekannt. Besonders vorteilhaft haben sich Vliese erwiesen, die insbesondere durch ein Übernähen mit separaten Fäden oder durch Vermaschen verfestigt sind. Derartige verfestigte Vliese werden beispielsweise auf Nähwirkmaschinen des Typs "Malimo" der Firma Karl Mayer, ehemals Malimo, hergestellt und sind unter anderem bei der Firma Hoftex Group AG beziehbar.

Als Träger kann weiterhin ein Vlies vom Typ Kunit oder Multiknit verwendet werden. Ein Kunitvlies ist dadurch gekennzeichnet, dass es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Malimo" der Firma Karl Mayer schon seit längerer Zeit hergestellt.

Ein Multiknitvlies ist gegenüber dem Kunitvlies dadurch gekennzeichnet, dass das Vlies durch das beidseitige Durchstechen mit Nadeln sowohl auf der Ober- als auch auf der Unterseite eine Verfestigung erfährt. Als Ausgangsprodukt für ein Multiknit dienen in der Regel ein beziehungsweise zwei nach dem Kunit-Verfahren hergestellte einseitig vermaschte Polfaser-Vlieswirkstoffe. Im Endprodukt sind beide Vliesstoffoberseiten durch Faservermaschungen zu einer geschlossenen Oberfläche geformt und durch nahezu senkrecht stehenden Fasern miteinander verbunden.

Die zusätzliche Einbringbarkeit weiterer durchstechbarer Flächengebilde und/oder streufähiger Medien ist gegeben.

Schließlich sind auch Nähvliese als Vorprodukt geeignet, einen erfindungsgemäßen Träger und ein erfindungsgemäßes Klebeband zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Malimo" der Firma Karl Mayer bekannt.

Besonders geeignet sind auch Nadelvliese. Beim Nadelvlies wird ein Faserflor zu einem Flächengebilde mit Hilfe von mit Widerhaken versehenen Nadeln. Durch wechselndes Einstechen und Ausziehen der Nadeln wird das Material auf einem Nadelbalken verfestigt, wobei sich die Einzelfasern zu einem festen Flächengebilde verschlingen.

Weiterhin besonders vorteilhaft ist ein Stapelfaservlies, das im ersten Schritt durch mechanische Bearbeitung vorverfestigt wird oder das ein Nassvlies ist, das hydrodynamisch gelegt wurde, wobei zwischen 2 Gew.-% und 50 Gew.-% der Fasern des Vlieses Schmelzfasern sind, insbesondere zwischen 5 Gew.-% und 40 Gew.- % der Fasern des Vlieses. Ein derartiges Vlies ist dadurch gekennzeichnet, dass die Fasern nass gelegt werden oder zum Beispiel ein Stapelfaservlies durch die Bildung von Maschen aus Fasern des Vlieses durch Nadelung, Vernähung, Luft und/oder Wasserstrahlbearbeitung vorverfestigt wird. In einem zweiten Schritt erfolgt die Thermofixierung, wobei die Festigkeit des Vlieses durch das Auf- oder Anschmelzen der Schmelzfasern nochmals erhöht wird.

Vorteilhaft und zumindest bereichsweise weist der Träger eine ein- oder beidseitig glattgeschliffene Oberfläche auf, vorzugsweise jeweils eine vollflächig glattgeschliffene Oberfläche. Die glattgeschliffene Oberfläche mag gechintzt sein, wie es beispielsweise in der EP 1 448 744 A1 erläutert wird. Auf diese Weise wird die Abweisbarkeit von Schmutz verbessert.

Als Ausgangsmaterialien für den Träger sind insbesondere (Chemie-)Fasern (Stapelfaser oder Endlosfilament) aus synthetischen Polymeren, auch synthetische Fasern genannt, aus Polyester wie Polyethylenterephthalat, Polyamid, Polyimid, Aramid, Polyolefin, Polyacrylnitril oder Glas, (Chemie)Fasern aus natürlichen Polymeren wie zellulosische Fasern (Viskose, Modal, Lyocell, Cupro, Acetat, Triacetat, Cellulon), wie Gummifasern, wie Pflanzeneiweißfasern und/oder wie Tiereiweißfasern und/oder natürliche Fasern aus Baumwolle, Sisal, Flachs, Seide, Hanf, Leinen, Kokos oder Wolle vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung des Vlieses eingesetzt werden.

Des Weiteren sind Garne, gefertigt aus den angegebenen Rohstoffen, ebenfalls geeignet. Bei Geweben oder Gelegen können einzelne Fäden aus einem Mischgarn hergestellt werden, also synthetische und natürliche Bestandteile aufweisen. In der Regel sind die Kettfäden und die Schussfäden jedoch jeweils sortenrein ausgebildet.

Bevorzugt wird als Material für den Träger Polyester verwendet, aufgrund der hervorragenden Alterungsbeständigkeit und der hervorragenden Medienbeständigkeit gegenüber Chemikalien und Betriebsmitteln wie Öl, Benzin, Frostschutzmittel u.ä. Darüber hinaus hat Polyester den Vorteil, dass sie zu einem sehr abriebfesten und temperaturbeständigen Träger führen, was für den speziellen Einsatzzweck zur Bündelung von Kabeln in Automobilen und beispielsweise im Motorraum von besonderer Wichtigkeit ist.

Gemäß einer weiteren Ausführungsform der Erfindung wird als Träger ein Glasfasergelege verwendet.

Vorteilhaft liegt das Flächengewicht des textilen Trägers zwischen 30 g/m² und 300 g/m² weiter vorteilhaft zwischen 50 g/m² und 200 g/m², besonders vorteilhaft zwischen 50 g/m² und 150 g/m², ganz besonders vorteilhaft zwischen 70 g/m² und 130 g/m². Gemäß einer besonders vorteilhaften Ausführungsform der Erfindung werden als Träger ein Gewebe oder ein Vlies aus Polyester eingesetzt, die ein Flächengewicht zwischen 50 g/m² und 150 g/m² aufweisen.

Vorteilhaft liegt der Masseauftrag des auf den Träger aufgebrachten und/oder in den Träger eingebrachten Bindemittels zwischen 30 g/m² und 300 g/m², weiter vorteilhaft zwischen 40 g/m² und 200 g/m², besonders vorteilhaft zwischen 50 g/m² und 130 g/m².

Das Einbringen in den Träger, insbesondere in einen Vlies- oder Gewebeträger kann beispielsweise durch Tränken des Trägers mit der UV-härtbaren Zusammensetzung erfolgen.

Gemäß einer Ausführungsform der Erfindung umfasst das Band neben dem feuchtigkeithärtenden Bindemittel zusätzlich noch einen Haftklebstoff.

Der **Haftklebstoff** ist eine Haftklebemasse, also eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Die Klebemasse kann nach dem Aushärten elastisch sein, um eine dauerhafte, gegen Schwingungen und Verwindungen unempfindliche Ummantelung sicherzustellen.

Bevorzugt sind Haftklebstoffe, wie sie in den veröffentlichten europäischen Patentanmeldungen EP 2 520 627 A1, EP 2 522 705 A1, EP 2 520 628 A1, EP 2 695 926 A1, EP 2 520 629 A1 und EP 3 433 330 A1 beschrieben werden, auf die hier diesbezüglich Bezug genommen wird.

Erfindungsgemäß wird als Klebstoff eine Strukturklebemasse (Konstruktionsklebstoff, Montageklebstoff) verwendet (siehe Römpp, Georg Thieme Verlag, Dokumentkennung RD-19-04489, letzte Aktualisierung: September 2012). Nach DIN EN 923: 2006-01 sind Strukturklebstoffe Klebstoffe, die Klebverbindungen bilden, die in einem Gefüge für eine vorgegebene längere Zeitspanne eine festgelegte Festigkeit beibehalten können (nach ASTM-Definition: *"bonding agents used for transferring required loads between adherends exposed to Service environments typical for the structure involved*")*.* Es sind also Klebstoffe für chemisch und physikalisch hoch beanspruchbare Klebungen, die im ausgehärteten Zustand zur Verfestigung der geklebten Substrate beitragen und zur Herstellung von Konstruktionen aus Metallen, Keramik, Beton, Holz oder verstärkten Kunststoffen verwendet werden. Die erfindungsgemäßen Strukturklebstoffe basieren insbesondere auf Reaktionsklebstoffen (Phenolharze, Epoxidharze, Polyimide, Polyurethane und andere).

Gemäß einer ersten Ausführungsform liegt die Haftklebemasse in Form einer getrockneten Polymerdispersion vor, wobei das Polymer aufgebaut ist aus: 5 bis 25 Gew.-%, vorzugsweise 10 bis 22 Gew.- % Ethylen, 30 bis 69 Gew.-%, vorzugsweise 40 bis 60 Gew.-% Alkylacrylatester mit C₄- bis C₁₂-Alkylresten, 20 bis 55 Gew.-%, vorzugsweise 28 bis 38 Gew.-% Vinylacetat, 0 bis 10 Gew.-% andere ethylenisch ungesättigte Verbindungen und die Haftklebemasse zwischen 15 und 100 Gewichtsteile eines Klebrigmachers (bezogen auf die Masse der getrockneten Polymerdispersion) enthält, wie in EP 2 520 627 A1 beschrieben. Bevorzugt handelt es sich bei dem Alkylacrylatester um n-Butylacrylat und/oder 2-Ethylhexyl-acrylat. Andere ethylenisch ungesättigte Verbindungen umfassen Alkyl(meth)acrylate, bevorzugt C₁- bis C₂₀-Alkyl (meth) acrylate mit Ausnahme der die Alkylacrylatester mit C₄- bis C₁₂-Alkylresten bildenden Monomere, aromatische Vinylmonomere wie Styrol, α-Methylstyrol und Vinyltoluol, C₁- bis C₁₀-Hydroxyalkyl(meth)acrylate wie insbesondere Hydroxyethyl- oder Hydroxypropyl(meth)acrylat, Vinylester aus bis zu 20 Kohlenstoffatomen enthaltenden Carbonsäuren wie Vinyllaurat, Vinylether aus bis zu 10 Kohlenstoffatomen enthaltenden Alkoholen wie Vinylmethylether oder Vinylisobutylether, Vinylhalogenide wie Vinylchlorid oder Vinylidendichlorid, Säureamide wie Acrylamid oder Methacrylamid und ungesättigte Kohlenwasserstoffe mit 3 bis 8 Kohlenstoffatomen wie Propen, Butadien, Isopren, 1-Hexen oder 1-Octen oder deren Mischungen. Darüber hinaus können dem Polymer als Monomer weiterhin vorteilhafterweise ein di- oder mehrfunktionelles Monomer zugesetzt sein, und zwar vorzugsweise zu 0 bis 2 Gew.-% und besonders vorzugsweise zu 0 bis 1 Gew.-%. Beispiele für mehrfunktionale ethylenisch ungesättigte Monomere (e) sind Divinylbenzol, Alkyldiacrylate wie 1,2-Ethylenglykoldiacrylat, 1,4-Butandioldiacrylat, 1,6-Hexandioldiacrylat, 1,8-Octandioldiacrylat oder 1,12-Dodecandioldiacrylat, Triacrylate wie Trimethylolpropantri-acrylat und Tetraacrylate wie Pentaerythritoltetraacrylat. Die Polymerdispersion wird hergestellt durch das Verfahren der Emulsionspolymerisation der genannten Komponenten. Besonders bevorzugte Ausführungsformen und ausführliche Beschreibungen der Einsatzstoffe sowie der Herstellungsverfahren findet man in EP 0 017 986 B1 sowie EP 0 185 356 B1.

Gemäß einer weiteren Ausführungsform liegt die Haftklebemasse in Form einer getrockneten Polymerdispersion vor, wobei das Polymer aufgebaut ist aus: (a) 90 bis 99 Gew.-% n-Butylacrylat und/oder 2-Ethylhexylacrylat, bevorzugt 2-Ethylhexylacrylat, (b) 0 bis 10 Gew.-% eines ethylenisch ungesättigten Monomers mit einer Säure- oder Säureanhydridfunktion, (c) 10 bis 1 Gew.-% eines oder mehreren von (a) und (b) verschiedenen ethylenisch ungesättigten monofunktionellen Monomeren, wie Acrylnitril und/oder Methacrylnitril, (d) 0 bis 1 Gew.-% eines di- oder mehrfunktionellen Monomers und die Haftklebemasse zwischen 15 und 100 Gewichtsteile eines Klebrigmachers (bezogen auf die Masse der getrockneten Polymerdispersion) enthält, wie in EP 2 522 705 A1 beschrieben. Eine besonders bevorzugte Ausführungsform der Erfindung umfasst also eine Mischung aus 2-Ethylhexylacrylat als Monomer (a) und Acrylnitril als Monomer (c). Als Monomer (b) kommen vorteilhaft in Betracht zum Beispiel Acrylsäure, Methacrylsäure, Itaconsäure, Maleinsäure, Fumarsäure und/oder Maleinsäureanhydrid. Bevorzugt sind Acrylsäure oder Methacrylsäure, gegebenenfalls die Mischung aus beiden. Beispiele für mehrfunktionale ethylenisch ungesättigte Monomere (d) sind Divinylbenzol, Alkyldiacrylate wie 1,2-Ethylenglykoldiacrylat, 1,4-Butandioldiacrylat, 1,6-Hexandiol-diacrylat, 1,8-Octandioldiacrylat oder 1,12-Dodecandiol-diacrylat, Triacrylate wie Trimethylolpropantriacrylat und Tetraacrylate wie Pentaerythritoltetraacrylat. Die Polymer-dispersion wird hergestellt durch das Verfahren der Emulsionspolymerisation der genannten Komponenten. Beschreibungen dieses Verfahrens werden zum Beispiel gegeben in der EP 1 378 527 B1 beschrieben.

Gemäß einer weiteren Ausführungsform liegt die Haftklebemasse in Form einer getrockneten Polymerdispersion vor, wobei das Polymer aufgebaut ist aus: (a) 40 bis 90 Gew.-% n-Butylacrylat und/oder 2-Ethylhexylacrylat, bevorzugt (b) 2-Ethylhexyl-acrylat, 0 bis 10 Gew.-% eines ethylenisch ungesättigten Monomers mit einer Säure- oder Säureanhydridfunktion, (c) 60 bis 10 Gew.-% eines oder mehreren von (a) und (b) verschiedenen ethylenisch ungesättigten monofunktionellen Monomeren, (d) 0 bis 1 Gew.-% eines di- oder mehrfunktionellen Monomers und die Haftklebemasse zwischen 15 und 100 Gewichtsteile eines Klebrigmachers (bezogen auf die Masse der getrockneten Polymerdispersion) enthält, wie in EP 2 520 628 A1 beschrieben. Als Monomer (b) kommen vorteilhaft in Betracht zum Beispiel Acrylsäure, Methacrylsäure, Itaconsäure, Maleinsäure, Fumarsäure und/oder Maleinsäureanhydrid. Bevorzugt sind Acrylsäure oder Methacrylsäure, gegebenenfalls die Mischung aus beiden. Unter Monomere (c) fallen Alkyl(meth)acrylate, bevorzugt C₁- bis C₂₀-Alkyl(meth)acrylate mit Ausnahme der (a) bildenden Monomere, aromatische Vinylmonomere wie Styrol, α-Methylstyrol und Vinyltoluol, C₁- bis C₁₀-Hydroxyalkyl-(meth)acrylate wie insbesondere Hydroxyethyl- oder Hydroxy-propyl(meth)acrylat, Vinylester aus bis zu 20 Kohlenstoffatomen enthaltenden Carbonsäuren wie Vinylacetat oder Vinyllaurat, Vinylether aus bis zu 10 Kohlenstoffatomen enthaltenden Alkoholen wie Vinylmethylether oder Vinylisobutylether, Vinylhalogenide wie Vinylchlorid oder Vinylidendichlorid, Säureamide wie Acrylamid oder Methacrylamid und ungesättigte Kohlenwasserstoffe mit 2 bis 8 Kohlenstoffatomen wie Ethylen, Propen, Butadien, Isopren, 1-Hexen oder 1-Octen. Erfindungsgemäß besonders bevorzugt ist Ethylacrylat. Beispiele für mehrfunktionale ethylenisch ungesättigte Monomere (d) sind Divinylbenzol, Alkyldiacrylate wie 1,2-Ethylenglykoldiacrylat, 1,4-Butandioldiacrylat, 1,6-Hexandioldiacrylat, 1,8-Octandioldiacrylat oder 1,12-Dodecandiol-diacrylat, Triacrylate wie Trimethylolpropantriacrylat und Tetraacrylate wie Pentaerythritoltetraacrylat. Die Polymerdispersion wird hergestellt durch das Verfahren der Emulsionspolymerisation der genannten Komponenten. Beschreibungen dieses Verfahrens werden zum Beispiel gegeben in der EP 1 378 527 B1 beschrieben.

Gemäß einer weiteren Ausführungsform liegt die Haftklebemasse in Form einer getrockneten und Elektronenstrahl (ESH) vernetzten polymeren Acrylatdispersion, insbesondere einer wässrigen Acrylatdisperion, bevorzugt mit einem Gelwert von größer gleich 40 %, bestimmt mittels Soxhlet-Extraktion, wobei die polymere Acrylatdispersion Polymere umfasst, die aufgebaut sind aus (a) monomeren Acrylaten und optional (b) ethylenisch ungesättigten Comonomeren, die keine Acrylate sind, wobei die Haftklebemasse zwischen 15 und 100 Gewichtsteile eines Klebrigmachers (bezogen auf die Masse der getrockneten polymeren Dispersion) enthält, wie in EP 2 695 926 A1 beschrieben.

Gemäß einer weiteren Ausführungsform weist die Haftklebemasse eine Scherviskosität ei einer Temperatur von 25°C während der Beschichtung aus Dispersion 200 bis 100.000 Pa.s bei einer Schergeschwindigkeit von 10⁻² s⁻¹ und 0,1 bis 10 Pa·s bei einer Schergeschwindigkeit von 100 s⁻¹ auf. Die Haftklebemasse besteht vorzugsweise aus einer wässrigen Acrylatdispersion, also einem in Wasser fein dispergierten Polyacrylsäureester mit Haftklebeeigenschaften, wie sie zum Beispiel im Handbook of Pressure Sensitive Technology von D. Satas beschrieben sind. Acrylathaftklebemassen sind typischerweise radikalisch polymerisierte Copolymere aus Acrylsäurealkylestern oder Methacrylsäurealkylestern von C₁- bis C₂₀-Alkoholen wie zum Beispiel Methylacrylat, Ethyl(meth)acrylat, n-Butyl(meth)acrylat, t-Butyl(meth)acrylat, Cyclohexyl(meth)acrylat, 2-Ethylhexyl(meth)acrylat, n-Octyl(meth)acrylat, iso-Octyl(meth)-acrylat, n-Decyl(meth)acrylat, n-Dodecyl(meth)acrylat, Tetradecyl-(meth)acrylat, Lauryl(meth)acrylat, Oleyl(meth)acrylat, Palmityl-(meth)acrylat und Stearyl(meth)acrylat neben weiteren (Meth)acrylsäureestern wie Isobornyl(meth)acrylat, Benzyl(meth)-acrylat, Phenyl(meth)acrylat und 2-Bro-moethyl(meth)acrylat, Alkoxy-alkyl(meth)acrylate wie Ethoxyethyl(meth)acrylat. Weiterhin fallen darunter Ester von ethylenisch ungesättigten Di- und Tricarbonsäuren und Anhydriden wie Ethylmaleat, Dimethylfumarat und Ethyl-methylitaconat. Ebenfalls fallen vinylaromatische Monomere wie zum Beispiel Styrol, Vinyltoluol, Methylstyrol, n-Butylstyrol, Decylstyrol darunter, wie in der EP 2 520 629 A1 beschrieben.

Gemäß einer weiteren Ausführungsform liegt die Haftklebemasse in Form einer getrockneten Polymerdispersion vor, wobei das Polymer aufgebaut ist aus: (a) 95,0 bis 100,0 Gew.-% n-Butylacrylat und/oder 2-Ethylhexylacrylat und (b) 0,0 bis 5,0 Gew.-% eines ethylenisch ungesättigten Monomers mit einer Säure- oder Säureanhydridfunktion, wie in der EP 2 433 330 A1 beschrieben. Vorzugsweise besteht das Polymer aus 95,0 bis 99,5 Gew.-% n-Butylacrylat und/oder 2-Ethylhexylacrylat und 0,5 bis 5 Gew.-% eines ethylenisch ungesättigten Monomers mit einer Säure- oder Säureanhydridfunktion, weiter vorzugsweise aus 98,0 bis 99,0 Gew.-% n-Butylacrylat und/oder 2-Ethylhexylacrylat und 1,0 bis 2,0 Gew.-% eines ethylenisch ungesättigten Monomers mit einer Säure- oder Säureanhydrid-funktion. Neben den aufgeführten Acrylatpolymeren können der Haftklebemasse neben gegebenenfalls vorhandenen Restmonomeren zusätzlich die weiter unten erwähnten Klebrigmacher und/oder Zuschlagstoffe wie Lichtschutz- oder Alterungsschutzmitteln in den ebenfalls unten genannten Mengen zugesetzt werden. Insbesondere sind keine weiteren Polymere wie Elastomere in der Haftklebemasse enthalten, das heißt, das die Polymere der Haftklebemasse bestehen nur aus den Monomeren (a) und (b) in den angegebenen Mengenverhältnissen.

Gemäß einer weiteren Ausführungsform liegt die Haftklebemasse in Form einer getrockneten und Polymerdispersion vor, wobei das Polymer aufgebaut ist aus: (a) 97,0 bis 98,0 Gew.-% n-Butylacrylat und/oder 2-Ethylhexylacrylat, (b) 2,0 bis 3,0 Gew.-% eines ethylenisch ungesättigten Monomers mit einer Säure- oder Säureanhydrid-funktion. Vorzugsweise besteht das Polymer aus 97,2 bis 97,7 Gew.-% n-Butylacrylat und/oder 2-Ethylhexylacrylat, beborzugt n-Butylacrylat, und 2,3 bis 2,8 Gew.-% eines ethylenisch ungesättigten Monomers mit einer Säure- oder Säureanhydridfunktion. Als Monomer (b) kommen vorteilhaft in Betracht zum Beispiel Acrylsäure, Methacrylsäure, Itaconsäure, Maleinsäure, Fumarsäure und/oder Maleinsäure-anhydrid.

Gemäß einer weiteren Ausführungsform sind die Haftklebemassen verntzerfrei. "Vernetzerfrei" im Sinne dieser Erfindung bedeutet, dass der Haftklebemasse keine zur Vernetzung befähigten Verbindungen zugesetzt werden. Wie hier verwendet, steht der Begriff Vernetzer für chemische Verbindungen, die imstande sind, Molekülketten miteinander zu verbinden, damit sich aus den zweidimensionalen Strukturen über Ausbildung intermolekularer Brücken dreidimensional-vernetzte Strukturen bilden können. Vernetzer sind solche - insbesondere bi- oder polyfunktionelle, meist niedermolekulare - Verbindungen, die unter den gewählten Vernetzungsbedingungen mit geeigneten - insbesondere funktionellen - Gruppen der zu vernetzenden Polymere reagieren können, somit zwei oder mehrere Polymere oder Polymerstellen miteinander verknüpfen ("Brücken" bilden) und somit ein Netzwerk aus dem zu vernetzenden Polymer beziehungsweise den zu vernetzenden Polymeren schaffen. Hierdurch kommt es in der Regel zur Kohäsionserhöhung. Typische Beispiele für Vernetzer sind chemische Verbindungen, die innerhalb des Moleküls oder an den beiden Molekülenden zwei oder mehr gleiche oder unterschiedliche funktionelle Gruppen aufweisen und folglich Moleküle gleicher oder auch unterschiedlicher Strukturen miteinander vernetzen können. Außerdem kann ein Vernetzer mit dem reaktiven Monomer oder Reaktivharz, wie oben definiert, reagieren, ohne dass es dabei zu einer Polymerisation im eigentlichen Sinne kommt. Denn im Gegensatz zum Aktivator, wie oben beschrieben, kann ein Vernetzer in das Polymer-Netzwerk eingebaut werden.

Vorteilhaft liegt der Masseauftrag der auf den Träger aufgebrachten Klebemasse zwischen 30 g/m² und 300 g/m², weiter vorteilhaft zwischen 40 g/m² und 200 g/m², besonders vorteilhaft zwischen 50 g/m² und 130 g/m².

Das Band wird vorzugsweise spiralförmig mit einer Überlappung von 30% bis 70%, bevorzugter 40 bis 50%, insbesondere etwa 50% um das langgestreckte Gut umwickelt.

### Beispiele:

### Beispiel 1 - Biegeprüfung zur Ermittlung der Steifigkeit

Ein Prüfmuster, bestehend aus 250 Einzelleitungen mit einem Leitungsquerschnitt von 0,35 mm², wurde mithilfe eines 5 cm breiten 3M Soft Cast-Band zu einem Musterleitungssatz gebündelt, so dass der Musterleitungssatz einen Durchmesser von 23±5 mm und eine Länge von 300±50 mm aufwies. Dieser Musterleitungssatz wurde mit dem 3M Soft Cast-Band spiralförmig umwickelt, wobei ein Überlapp von 50% gewährleistet wurde. Anschließend wurde das versteifende Material mittels Wasserdampf gehärtet. Die Beneblungszeit lag dabei zwischen 20 und 30 Sekunden. Ca. 3 Min nach der Aktivierung wurde die Endfestigkeit erreicht und das Muster konnte getestet werden.

Der gehärtete Musterleitungssatz wurde einer Biegeprüfung unterzogen, um den Einfluss des versteifenden Materials auf die Steifigkeit zu bestimmen. Die Biegeprüfung wurde an einer Zugprüfmaschine vorgenommen. Dafür wurde der Musterleitungssatz auf zwei Backen mit einem Abstand von 70 mm gelegt und mittig mit einer Druckfinne um einen Weg von 30 mm eingedrückt und belastet. Die für die Verformung des Messwegs nötige Kraft wurde von einer Zugprüfmaschine in Newton aufgezeichnet. Die Prüfgeschwindigkeit betrug 100 mm/min, sowohl bei der Belastung, als auch bei der Entlastung des Musterleitungssatzes. Die Prüfung wurde an 3 verschiedenen Stellen des Leitungssatzes (Anfang, Mitte und Ende) durchgeführt. Die Biegekraft resultiert aus dem Mittelwert der drei Einzelmessungen und wurde in drei Kategorien wie folgt bewertet:

### Bewertungskategorien 3-Punkt Biegeversuch:

| | |
|---|---|
| + | gut geeignet für die Anwendung (500-750 N) |
| ○ | eingeschränkt geeignet für die Anwendung (400-500 N und 700-800 N) |
| - | nicht geeignet für die Anwendung (<400 und >800 N) |

Zum Vergleich wurde ein kommerziell erhältliches Klebeband, tesa^{®} 51036, dem gleichen Versuch unterworfen. Die Ergebnisse sind in der nachfolgenden Tabelle 1 aufgeführt.

### Beispiel 2 - C-Form-Prüfung zur Ermittlung der Steifigkeit bei unterschiedlichen Temperaturen

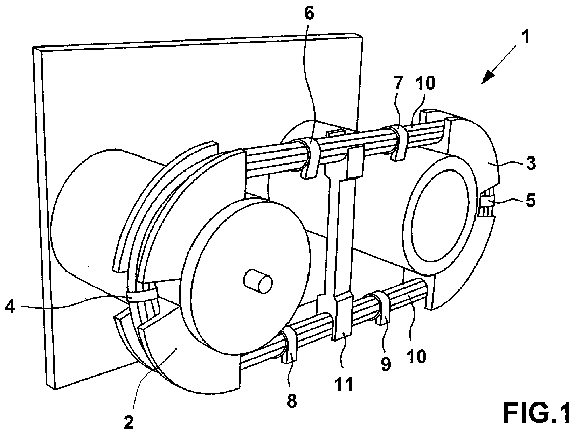

Zur Ermittlung der Steifigkeit eines gebogenen Kabelmusters wurde ein Testverfahren entwickelt (C-Kabelmuster-Biegeprüfung). Zur Herstellung eines C-Kabelmusters (siehe Fig. 1) wird eine Kabelleitung (10) mit einem Leitungsquerschnitt von 0,35 mm² 100 mal um eine Halterung (1) zu einem Musterleitungssatz gewickelt. Die Halterung (1) weist zwei gegenüberliegende, halbkreisförmige Führungen (2, 3) mit einem Durchmesser von 120 mm auf, die mit einem Abstand (A) von etwa 210 mm beabstandet sind. Der gewickelte Kabelsatz ist in **Fig. 1** dargestellt.

Die Zahl der Kabelwicklungen beträgt 100. Es entsteht ein Musterleitungssatz mit einem Durchmesser von 15±5 mm und einem Umfang von 690 mm. An den Apizes der Halbkreissegmente und an jeweils zwei Geradenabschnitten (Schenkeln) wird das Kabelbündel (10) mit Kabelbindern (4, 5, 6, 7, 8, 9) mit einer Zugkraft von 210±10 N zusammengeschnürt und fixiert, so dass das das Kabelbündel (10) nach Herausnahme aus der Halterung eine ausreichende Steifigkeit besitzt, um sich nicht zu verformen. Um sie Steifigkeit des Kabelbündels (10) weiter zu verbessern, wird zwischen den Schenkeln des Kabelbündels eine Stütze (11) positioniert und ebenfalls mit Kabelbindern fixiert.

Das so hergestellte Kabelbündel (10) wird aus der Halterung herausgenommen und mit dem zu prüfenden Klebeband (Breite 19 mm-20 mm) mit einer 50%igen Überlappung umwickelt. Dazu wird mit der Umwicklung an einem Kabelbinder (z.B. 6 oder (7)) des Schenkels in Richtung Kreissegment ((6)->(4) oder (7)->(5)) begonnen. Wenn die Umwicklung den Kabelbinder (4) bzw. (5) am Apex des Halbkreissegments erreicht, wird dieser entfernt und die Wicklung bis zum nächsten Kabelbinder ((4)->(8) bzw. (5) -> (9)) des gegenüberliegenden Schenkels fortgeführt. Genauso wird auch an der anderen Seite, am anderen Halbkreissegment verfahren.

Die so präparierten Muster werden der entsprechenden Vernetzungsmethode (Besprühung mit Wasserdampf) zugeführt. Mit einem Seitenschneider werden die Muster, benachbart zu den noch vorhandenen Kabelbindern geschnitten, um zwei "C-förmige" Kabelmuster (C-Kabelmuster) zu erhalten, die an beiden Seiten des halbkreisförmigen, umwickelten Abschnitts jeweils auch einen nicht umwickelten Abschnitt aufweisen. Der Schnitt erfolgt im Abstand des Durchmessers (120 mm) vom Apex des Halbkreissegments, projiziert auf die Kreismitte.

Mit je einem Stück Kabel werden Schlaufen an die Schenkelenden der Muster gebunden, damit sie an dem einen Ende aufgehängt und am anderen Ende ein Gewicht angehängt werden kann. Die verbliebenen Kabelbinder werden jetzt entfernt, da sie das Prüfergebnis verfälschen können. Der Abstand zwischen den Schenkeln wird nun bestimmt.

Eines der beiden Muster wird unter Raumtemperatur gelagert und das andere bei 60°C.

An den jeweiligen unteren Schenkel des "C-Prüflings" wird ein 1 kg-Gewicht gehängt. Nach einer Stunde wird die Auslenkung des Kabelbündels notiert (Auslenkverhalten 1 h bei RT bzw. 60°C) und das Gewicht entfernt. Nach einer Minute wird die Auslenkung erneut bestimmt (Rückstellverhalten 1 min bei RT bzw. 60°C). Nach einer Stunde wird die Auslenkung dann wieder bestimmt und notiert (Rückstellverhalten 1 h bei RT bzw. 60°C).

Die ermittelten Werte der C-Form-Verformung wurden in drei Kategorien eingestuft, gut geeignet für die Anwendung, eingeschränkt geeignet für die Anwendung und nicht geeignet für die Anwendung. Die Kategorien wurden wie folgt bewertet:

### Bewertungskategorien C-Form-Biegeversuch (Raumtemperatur):

| | |
|---|---|
| + | gut geeignet für die Anwendung (< 15% Auslenkung) |
| ○ | eingeschränkt geeignet für die Anwendung (>15-30%) |
| - | nicht geeignet für die Anwendung (>30%) |

### Bewertungskategorien C-Form-Biegeversuch (60°C):

| | |
|---|---|
| + | gut geeignet für die Anwendung (< 25% Auslenkung) |
| ○ | eingeschränkt geeignet für die Anwendung (>25-40%) |
| - | nicht geeignet für die Anwendung (>40%) |

### Bewertungskategorien C-Form-Biegeversuch (Rückstellverhalten bei RT und 60°C):

| | |
|---|---|
| + | gut geeignet für die Anwendung (< 10% Auslenkung) |
| ○ | eingeschränkt geeignet für die Anwendung (10-30%) |
| - | nicht geeignet für die Anwendung (>30%) |

Zum Vergleich wurde ein kommerziell erhältliches Klebeband, tesa^{®} 51036, dem gleichen Versuch unterworfen. Die Ergebnisse sind ebenfalls in der nachfolgenden Tabelle 1 aufgeführt.

**Tabelle 1:**

| | 3-Punkt Biegeversuch | C-Form-Verformung bei RT | C-Form-Rückstellverhalten bei RT |
|---|---|---|---|
| Erfindungsgemäßes Band | + | + | + |
| tesa^{®} 51036 | - | - | - |

| | C-Form-Verformung bei 60°C | C-Form-Rückstellverhalten bei 60°C | |
|---|---|---|---|
| Erfindungsgemäßes Band | + | + | |
| tesa^{®} 51036 | - | - | |

### Legende:

| | |
|---|---|
| + | gut geeignet für die Anwendung |
| ○ | eingeschränkt geeignet für die Anwendung |
| - | nicht geeignet für die Anwendung |

## Patentansprüche

1. Verfahren zum Ummanteln von langgestrecktem Gut, wobei ein Band, das ein mit Feuchtigkeit härtendes Bindemittel auf einem Träger umfasst, zunächst mit Wasser befeuchtet wird und unmittelbar anschließend in einer Schraubenlinie um das langgestreckte Gut geführt wird oder das langgestreckte Gut in axialer Richtung von dem Band umhüllt wird, das langgestreckte Gut mitsamt dem umhüllenden Band in die gewünschte Anordnung gebracht wird, das langgestreckte Gut in dieser Anordnung gehalten wird, während das mit Feuchtigkeit härtende Bindemittel aushärtet,
wobei das mit Feuchtigkeit härtbare Bindemittel freie Isocyanatgruppen aufweisende NCO-Präpolymere auf Basis von aromatischen Polyisocyanaten und tertiären Aminstickstoff aufweisenden Polyolen umfasst.

2. Verfahren zum Ummanteln von langgestrecktem Gut, wobei ein Band, das ein mit Feuchtigkeit härtendes Bindemittel auf einem Träger umfasst, in einer Schraubenlinie um das langgestreckte Gut geführt wird oder das langgestreckte Gut in axialer Richtung von dem Band umhüllt wird, das langgestreckte Gut mitsamt dem umhüllenden Band in die gewünschte Anordnung gebracht wird, das langgestreckte Gut in dieser Anordnung gehalten wird, und das mit Feuchtigkeit härtende Bindemittel durch die Zufuhr von Feuchtigkeit zum Aushärten gebracht wird,
wobei das mit Feuchtigkeit härtbare Bindemittel freie Isocyanatgruppen aufweisende NCO-Präpolymere auf Basis von aromatischen Polyisocyanaten und tertiären Aminstickstoff aufweisenden Polyolen umfasst.

3. Verfahren nach Anspruch 2, **dadurch gekennzeichnet, dass** die Feuchtigkeit mittels Wasserdampf zugeführt wird.

4. Verfahren nach einem der vorgehenden Ansprüche, **dadurch gekennzeichnet, dass** das Band spiralförmig mit einer Überlappung von 30% bis 70% um das langgestreckte Gut umwickelt wird.

5. Verfahren nach Anspruch 4, **dadurch gekennzeichnet, dass** das Band spiralförmig mit einer Überlappung von 40% bis 60% um das langgestreckte Gut umwickelt wird.

6. Verfahren nach einem der vorgehenden Ansprüche, **dadurch gekennzeichnet, dass** das Band zusätzlich noch einen Haftklebstoff umfasst.

7. Verfahren nach einem der vorangehenden Ansprüche, **dadurch gekennzeichnet, dass** das Trägermaterial ein Polyestervlies oder ein Glasfasergelege umfasst.

8. Verfahren nach einem der vorangehenden Ansprüche, **dadurch gekennzeichnet, dass** das langgestreckte Gut Leitungen oder Kabelsätze umfasst.

9. Verfahren nach einem der vorangehenden Ansprüche, **dadurch gekennzeichnet, dass** die Anordnung ein Kabelsatzplan ist.

## Claims

1. Method for jacketing an elongated item, where a tape which comprises a moisture-curing binder on a carrier is first moistened with water and immediately thereafter is guided in a helical line around the elongated item or the elongated item is wrapped in an axial direction by the tape, the elongated item together with the tape wrapping is brought into the desired disposition, the elongated item is held in this disposition, while the moisture-curing binder cures,
where the moisture-curable binder comprises NCO prepolymers which contain free isocyanate groups and are based on aromatic polyisocyanates and polyols containing tertiary amine nitrogen.

2. Method for jacketing an elongated item, where a tape which comprises a moisture-curing binder on a carrier is guided in a helical line around the elongated item or the elongated item is wrapped in an axial direction by the tape, the elongated item together with the tape wrapping is brought into the desired disposition, the elongated item is held in this disposition, and the moisture-curing binder is brought to cure by the supply of moisture,
where the moisture-curable binder comprises NCO prepolymers which contain free isocyanate groups and are based on aromatic polyisocyanates and polyols containing tertiary amine nitrogen.

3. Method according to Claim 2, **characterized in that** the moisture is supplied by means of steam.

4. Method according to any of the preceding claims, **characterized in that** the tape is wound spirally around the elongated item with an overlap of 30% to 70%.

5. Method according to Claim 4, **characterized in that** the tape is wound spirally around the elongated item with an overlap of 40% to 60%.

6. Method according to any of the preceding claims, **characterized in that** the tape additionally comprises a pressure sensitive adhesive.

7. Method according to any of the preceding claims, **characterized in that** the carrier material comprises a polyester nonwoven or a laid glass-fibre scrim.

8. Method according to any of the preceding claims, **characterized in that** the elongated item comprises leads or cable sets.

9. Method according to any of the preceding claims, **characterized in that** the disposition is a cable set plan.

## Revendications

1. Procédé destiné à envelopper un produit allongé, une bande, qui comprend un liant durcissant par l'humidité sur un support, étant d'abord humidifiée par de l'eau et ensuite directement guidée autour du produit allongé le long d'une ligne hélicoïdale ou le produit longitudinal étant entouré dans la direction axiale par la bande, le produit allongé étant amené dans la disposition souhaitée conjointement avec la bande qui l'entoure, le produit allongé étant maintenu dans cette disposition pendant que le liant durcissant par l'humidité durcit,
le liant durcissant par l'humidité comprenant des prépolymères NCO présentant des groupes isocyanate libres à base de polyisocyanates aromatiques et de polyols présentant de l'azote d'amine tertiaire.

2. Procédé destiné à envelopper un produit allongé, une bande, qui comprend un liant durcissant par l'humidité sur un support, étant guidée autour du produit allongé le long d'une ligne hélicoïdale ou le produit longitudinal étant entouré dans la direction axiale par la bande, le produit allongé étant amené dans la disposition souhaitée conjointement avec la bande qui l'entoure, le produit allongé étant maintenu dans cette disposition et le liant durcissant par l'humidité étant amené à durcir par l'apport d'humidité,
le liant durcissant par l'humidité comprenant des prépolymères NCO présentant des groupes isocyanate libres à base de polyisocyanates aromatiques et de polyols présentant de l'azote d'amine tertiaire.

3. Procédé selon la revendication 2, **caractérisé en ce que** l'humidité est amenée au moyen de vapeur d'eau.

4. Procédé selon l'une des revendications précédentes, **caractérisé en ce que** la bande est enroulée autour du produit allongé en forme de spirale avec un recouvrement de 30% à 70%.

5. Procédé selon la revendication 4, **caractérisé en ce que** la bande est enroulée autour du produit allongé en forme de spirale avec un recouvrement de 40% à 60%.

6. Procédé selon l'une des revendications précédentes, **caractérisé en ce que** la bande comprend en outre encore un autoadhésif.

7. Procédé selon l'une des revendications précédentes, **caractérisé en ce que** le matériau support comprend un non-tissé de polyester ou un mat de fibres de verre.

8. Procédé selon l'une des revendications précédentes, **caractérisé en ce que** le produit allongé comprend des lignes ou des câblages.

9. Procédé selon l'une des revendications précédentes, **caractérisé en ce que** la disposition autour du produit allongé est un agencement spatial de câbles.
